Europäisches Patentamt

European Patent Office

Office européen des brevets

(11) Publication number: **0 592 932 A2**

## EUROPEAN PATENT APPLICATION

(21) Application number: **93116134.3**

(22) Date of filing: **06.10.93**

(51) Int. Cl.5: **H04N 5/21**

(30) Priority: **14.10.92 FI 924649**

(43) Date of publication of application:
**20.04.94 Bulletin 94/16**

(84) Designated Contracting States:
**DE FR GB IT NL**

(71) Applicant: **NOKIA TECHNOLOGY GmbH**
**Östliche Karl-Friedrich-Strasse 132**
**D-75175 Pforzheim(DE)**

(72) Inventor: **Öistämö, Kai**
**Fürstenbergstrasse, 12**
**D-45355 Essen(DE)**

(54) **Procedure for attenuating the noise of a video signal, and noise attenuator.**

(57) A method and a filter for eliminating noise from a sampled video signal, in which samples from at least one line are conducted into a window and, using the samples of the window, a filtered sample ($Y_n$) is formed to replace the original sample ($X_n$). First, the difference between an original sample ($X_n$) to be analysed and the original adjacent samples thereof are calculated. The differences are compared with a given threshold value ($K_{thresh.}$). An average of the sample being analysed and the adjacent samples is calculated, the difference thereof from the sample being analysed is smaller than said threshold value, If at least one difference is smaller than the threshold value, the average is set to become the filtered sample ($Y_n$), but otherwise the filtered sample is the same as the original sample being analysed. The calculation of the average used in the method may also be accomplished recursively.

LINE m-2, FIELD t

LINE m, FIELD t

LINE m+2, FIELD t

**Fig. 6**

The present invention relates to a procedure and a filter for attenuating the noise of a video signal entering as a sample sequence.

In the television system the entire programme transmission chain forms a noise source deteriorating the quality of the picture being received. The camera used for preparing the programme, the processing of the video signal and the storing means generate noise in the signal, as well as the transmitter, the transmission channel and the TV receiver itself. If the source of the programme at the beginning of the transmission chain is a film tape, the film contains film noise, or it is possibly scraped, or extremely small picture areas may not be contained therein, thus generating so-called drop-out noise. If the programme source is a TV programme taped on a home video tape recorder, more noise is produced by the tape noise of the tape recorder and by the errors in the video tape (drop-out noise).

Since there are several sources of noise, various types of noise are included respectively in the picture signal processed in the receiver, which the receiver should be able to get rid of, or which should be reduced to the extent that the final picture to be displayed is not disturbingly noisy. This means that the filters of a TV receiver should be applicable for filtering all types of noise. It is to be noted that the human eye is more sensitive to observe noise on dark picture surfaces than on light ones.

The filters differ from each other significantly also on the basis of the noise attenuation properties they have. In practice, majority of the noise entering the TV receivers can be modelled by means of normal distribution, with which the linear methods operate more reliably. The transients and the low carrier wave/noise ratio caused primarily by random reasons and sources, such as industrial or telecommunication disturbances, generate dropping-out from the phase of the FM demodulator. Said secondary noise peaks are short in duration, high in amplitude, and they are generally called impulses.

An averaging filter may yield a poor result, even if one impulse affects the input of the filter. Therefore, not only the linear filters are considered robust since the maximal impact of the impulses on the output is not affected thereby. Respectively, the output of the median filter is reliable for a constant signal as long as the proportion of the impulses of the input samples is less than half.

The IDTV (Improved Definition TV), in which signal processing circuits are made use of, provides various possibilities for removing noise. It is known in the art to employ a peaking circuit for improving the picture and thereafter, a circuit having with a transfer function to preventing the small signal changes, i.e. the output signal changes with a change in the input signal only when the change in the input signal exceeds a set limit. The function of the latter circuit is called "coring". In the TV systems the colour information is transmitted on a narrower bandwidth than the lightness information. Therefore, the vertical colour edges are defined out of focus on the picture tube. This can be aided artificially in the receiver by making the transients occurring in the colour signal more abrupt. In focussing more the picture, various ways are adopted to emphasize the high frequencies displayed in the picture.

One circuit like that is disclosed in an article by IEEE

Transactions on Consumer Electronics Company, Vol. 34, No. 3, August 1988, Naimpally et al.: 'Integrated Digital IDTV Receiver with Features'. In the circuit described in the article, p. 2, first, high-frequency components are separated, these being then emphasized with a linear filter. Since the noise occurs primarily in a high-frequency area, a coring operation is accomplished thereafter so that the emphasized noise can be removed. The emphasized high-frequency components thus obtained (edges etc.) are later added to the original picture.

'Coring' refers to a prior art noise attentuation method. As mentioned above, it refers to a transfer function preventing small signal changes, in which the output signal changes along with the changed input signal only when a change in the input signal exceeds a given limit, i.e. only sufficiently great changes of the input signal are shown in the output. Since smaller signal changes are not visible in the output while the large ones are, the 'coring' imitates the human sight system because the eye is more sensitive to noise in large, flat areas than near areas containing large horizontal, vertical or temporal frequency components.

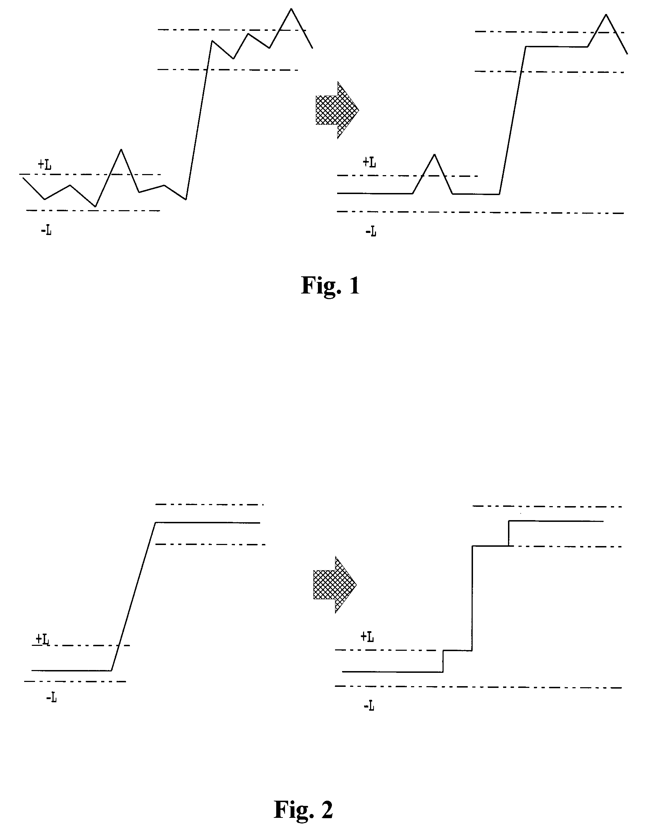

Fig. 1 presents the principle of the coring function. In the left-hand part of the picture an input signal is shown, the amplitude whereof jumping ramp-wise. The initial part of the input signal represents a flat picture area so that the level of the signal is expected to be almost constant. However, the signal includes noise, because of which the signal level varies as described above. After a ramp-wise frequency change, the level should again remain flat (a new steady picture area), but because of the noise the signal shape receives the shape of irregular saw tooth. When a coring operation is carried out next, the output signal resembles the one presented in the right-hand part of the picture. As can be seen, the output signal is constant as long as the input signal varies within the selected limits -L and +L and only the amplitudes extending beyond the limits are visible in the output signal and can be separated as deviations in a flat area in the picture displayed. Said deviations represents small, one-sample details in the image. The threshold value L has been predetermined according to an assumption, e.g. based on the assumption that signal variations smaller than a given value L are interpreted as noise.

A drawback of the coring operation is that it may cause so-called striping, i.e. a pixel which should be uniformly toned, looks striped. This is because the constant output level is dependent on what the value of a first sample is in the part representing the flat area of each line. Therefore, the values of the constant levels representing the uniform areas may vary by ±L between the consecutive lines, thus causing lining.

A second drawback is that the ramp signal becomes distorted. This becomes more obvious in Fig. 2. The ramp should be similar to the drawing on the left-hand side of the figure, but the coring operation distorts the ramp in the fashion seen on the right-hand side of the figure. Normally, a preceding sample is during the ramp closer than ±L to the present sample, whereby the present sample still remains in the "tube", not being seen in the output. Thus, a step enters the beginning of the ramp until the ascending ramp exits the ±L tube. A similar phenomenon occurs in the upper end of the ramp where also a step is formed when the ramp turns into a signal representing a second flat area. The drawback can, however, be effectively reduced by using a ramp detector. The coring operation is not as such a sufficiently effective noise attenuation method.

In the Finnish patent application FI-916162, the applicant Salon Televisiotehdas Oy, a noise filter based on adaptive recursive filtering is disclosed. The filter comprises a recursive filter for filtering input information $X(x,y,t)$ and for providing the output information $Y(x,y,t)$, a non-linear regulator connected to the recursive filter for adapting the recursion of the recursive filter and for storing the filtered information $Y(x,y,t)$ of the memory connected to the output of the recursive filter. The filter moreover comprises a non-linear filter, e.g. a median filter, the output thereof being connected to the input of the re- cursive filter and to which the non-filtered information $X(x,y,t)$ is first taken and from which it is carried in filtered form to the recursive filter. In practice, the recursive filter can be reconstructed within a non-linear filter, so that the non-linear filter is also recursive. The output signal of such filter can furthermore be improved by connecting thereafter a filter according to the present invention.

The present invention discloses a procedure with which the noise of a video signal can be effectively removed and which is not encumbered by the drawbacks of the prior art coring method described above. The method is characterized in what is presented in claim 1, and the circuit what is presented in claim 9. The embodiment in which the filter of the present invention is connected with the filter of the above-mentioned Finnish patent application is presented in claim 13.

The method is based on the use of conditional average. According to said average, one or more differences of a sample to be analysed and of adjacent samples thereof are calculated per each sample being analysed. Preferably several adjacent samples are used and they may be immediate neighbours or also picked from a wider area. The neighbouring samples can be taken from one and same field, whereby the calculation is spatial, or from an earlier field, whereby the calculation is spatial-temporal. The adjacent samples can be either original samples, whereby the output of the filter has not been connected into one input, or preferably samples for which the filtering has already been done. The situation is like this when using a recursive filter, whereby the output of the filter has been connected to form one input. By conducting the output signal into one or more line delay, and by connecting the output of the delay to become the input for the filter, a filter window can be produced in which the samples preceding the sample to be analysed are all filtered samples. The calculated differences are compared with a preset threshold value. If the difference is smaller than he threshold value, the sample being studied is replaced by an average calculated using a given method, in an opposite instance the sample being studied is not changed.

According to a first advantageous embodiment, the recursive calculation of the average is used within a field. Now, the adjacent samples to be included in calculating the average have been obtained as a result of recursive filtering.

According to a second embodiment, also implemented intra field, an N*N window is used. In the window, each sample is compared with the centremost sample of the window being analysed. Only such samples are included in calculation of the average, in which the value is close enough to the sample being analysed.

A third embodiment is a temporal expansion of the first embodiment, and respectively the fourth embodiment is a temporal expansion of the second embodiment. In said embodiments, samples from a previous field are included in the calculation.

The invention is described below, by demonstrating with the aid of the accompanying figures, which illustrate as follows:

Fig. 1      the principle of the coring operation,

Fig. 2      distortion of the ramp signal due to the effect of the coring opera-

| Fig. 3 | samples used for calculating the conditional average in a simple embodiment, |
| Fig. 4 | dependence of the threshold value on the sample, |
| Fig. 5 | samples used for calculating the conditional average in first embodiment, |
| Fig. 6 | samples used for calculating the conditional average in second embodiment, |
| Fig. 7 | samples used for calculating the conditional average in third embodiment, |
| Fig. 8 | samples used for calculating the conditional average in fourth embodiment, |
| Figs 9a, 9b | a block diagram of the noise attenuator, |
| Fig. 10 | a filter window used in the noise attenuator of Fig. 9. |

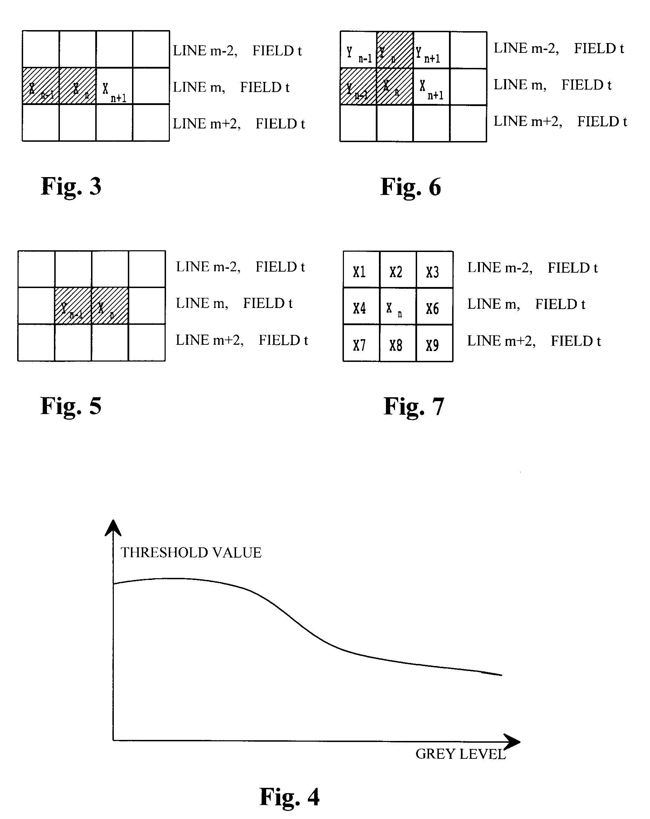

Figs 1 and 2 are described above in conjunction with with the state of art description. Fig. 3, illustrating the idea of the invention simplified to the utmost, presents part of one line m of one field t in a television picture. The line consists of successive noise-containing samples. If a flat area is in question, the consecutive samples $...X_{n-1},X_n, X_{n-1}...$ should be of the same value. Because of the noise it is not like that.

Sample $X_n$ is now analysed. First, the difference $|X_n-X_{n-1}|$ thereof and of an adjacent sample $X_{n-1}$ is calculated. If it is greater than a determined threshold value $K_{thresh.}$, it is interpreted that a flat area is not in question. Now, the sample $X_n$ is allowed to keep the original value. But if the difference is smaller than the threshold value, it is interpreted that such flat area is in question in which the samples should have equal values. In this case the average $X_{AVE} = \frac{1}{2} (X_n-X_{n-1})$ of the samples is calculated, and the sample $X_n$ being analysed is replaced therewith. In the calculation of the average, more samples than the immediate adjacent sample can be included. For the output of the filter the following can be written:

$$Y_n = \tfrac{1}{2} (X_n-X_{n-1}) \text{ if } |X_n-X_{n-1}|< K_{thresh.}$$

The threshold value $K_{thresh.}$ can be constant but it is preferable to make it dependent on the grey level of the sample being analysed so that when the area is very light in tone, the threshold is small and in darker areas a greater threshold value is used. In other words, the threshold value can be a function which as well as possible corresponds to the properties of the human eye. The dependence of the threshold value on the grey tone is sketched in Fig. 4. The threshold value usually conforms to Weber Law

$$K = \tfrac{\Delta L}{L} .$$

It indicates the smallest changes $\Delta L$ of the luminance $L$, which can be discerned with the human eye, and according to the law the eye is more sensitive to changes in dark areas in which $L$ is small than in light areas where $L$ is great.

The basic method just described can be improved according to the first embodiment shown in Fig. 5 where the calculation is recursive. It is accomplished so that, if the difference of sample $XC_n$ and of an adjacent sample $Y_{n-1}$ filtered earlier is smaller than the threshold value $K_{thresh.}$, the original adjacent sample $X_{n-1}$ is not used in calculating the average, instead, the recursive average $Y_{AVE} = \frac{1}{2} (X_n-Y_{n-1})$ is used, this being inserted in place of sample $X_n$. Sample $Y_{n-1}$ is thus either an original sample $X_{n-1}$ if the threshold value condition in analysing said sample has been exceeded, otherwise the sample calculated according to the above formula. Next, sample $X_{n+1}$, etc. Is calculated. All samples of the line are analysed in equivalent manner. As above, a plurality of samples may be included in the calculation of the conditional average. For the output of the filter, the following can be written:

$$Y_n = \tfrac{1}{2} (X_n-Y_{n-1}) \text{ if } |X_n-X-1| \text{ if } |X_n-X_{n-1}|< K_{thresh.}$$

In the above procedures the analysis proceeds from line to line, and the samples for the calculation are taken from one and same line. This may though cause that a flat area may look striped (the area may look striped although it should be flat). The striping can be reduced by expanding, according to the second embodiment shown in Fig. 6, the samples used for calculating the conditional recursive average vertically, i.e. by taking in samples from an adjacent line while remaining in the same field (spatial expansion). Letter Y refers to an earlier filtered sample. An earlier filtered sample $X_{n,m-2,t}$ of the same field t, above the sample $X_{n,m,t}$ being analysed and located on a preceding line m-2, is included in the expansion process. Now, it is first analysed whether the difference $X_n-Y_{n-1}$ of the successive samples of line m is smaller than the threshold value $K_{thresh.}$, and whether in vertical direction the difference of sample $X_{n,m,t}$ and sample $Y_{n,m-2,t}$ is smaller than $K_{thresh.}$. If the condition is in force only in horizontal direction, it is calculated, as in conjunction with Fig. 5, the recursive average $Y_{AVE} = \frac{1}{2} (X_{n,m}+Y_{n-1,m})$, this being inserted in place of sample $X_n$. If the condition is in force only vertically, in place of the sample $X_n$ being analysed, that is, line m, a recursive average $X_{AVE} =$

$\frac{1}{2}$ ($X_{n,m}$ + $Y_{n,m-2}$) is placed. If the conditions are in force in both directions simultaneously, in place of sample $X_n$ the recursive average $Y_{AVE}$ = 1/3*($X_{n,m}$ + $Y_{n-1,m}$ + $Y_{n,m-2}$) of all three samples is inserted. Now, for the output of the filter the following can be written:

$Y_n$ = $\frac{1}{2}$ ($X_{n,m}$ + $Y_{n-1,m}$) if $|X_{n,m}$-$Y_{n-1,m}|$< $K_{thresh.}$
$Y_n$ = $\frac{1}{2}$ ($X_{n,m}$ + $X_{n,m-2}$) if $|X_{n,m}$-$Y_{n,m-2}|$< $K_{thresh.}$
$Y_n$ = 1/3* ($X_{n,m}$ + $Y_{n-1,m}$ + $Y_{n,m-2}$) if $|X_{n,m}$-$Y_{n-1,m}|$< $K_{thresh.}$ and $|X_{n,m}$-$Y_{n,m-2}|$< $K_{thresh.}$

According to the third embodiment, Fig. 7, the noise elimination ability can furthermore be improved by expanding the samples included in calculating the conditional average to comprise a larger window in the same field, for instance a 3*3 window, in which the sample to be studied is in the middle of the window. For the sake of clarity, the samples in the image are indicated by $X_1$...$X_9$ and sample $X_n$ is located in place of $X_8$. It is obvious that reference $X_1$ refers to sample $X_{n-1,m-2,t}$, the rest respectively. The calculation in using said window can be non-recursive or recursive. In the first alternative, all samples of the window are original non-filtered samples. When using recursive calculation, it is possible to proceed so that the part of the samples for which the calculation has already been accomplished, are included in the window. Now, the samples $X_1$, $X_2$, $X_3$ and $X_4$ must be interpreted as already filtered samples $Y_1$, $Y_2$, $Y_3$, and $Y_4$. This is easy to understand when the samples of the lines are assumed to enter the window on the right-hand side, i.e. at a moment when the situation is like in Fig. 7 and at a subsequent moment of calculation, all samples have moved by one step to the left, and new samples have entered the right-hand edge. According to said embodiment, for each sample of the window a difference thereof and sample $X_n$ is calculated. Thus, eight pieces of differences are obtained. Next, it is analysed which of the differences meet the condition "the difference is smaller than $K_{thresh.}$". Only the samples meeting the condition are included in the calculation of the average.
Now, the output $Y_n$ of the filter can be written as follows: $Y_n$ = AVE ($X_n$,$X_1$,$X_2$,$X_3$, $X_4$, $X_6$, $X_7$,$X_8$,$X_9$) only of the samples $X_j$ for which $|X_n$-$X_j|$ < $K_{thresh.}$ is true
when j = 1, 2, 3, 4, 6, 7, 8, 9.

In all embodiments described above the filtering has been carried out for the samples of one and same field. Intra field processing is thus in question. This may, however, lead to flickering image in some cases. In order to avoid that phenomenon, the filtering can be expanded temporally by including samples from a preceding field t-1. Hereby, a filter of a second embodiment e.g. according to Fig. 6 can be expanded as follows:

$Y_n$ = $\frac{1}{2}$ ($X_{n,m,t}$ + $Y_{n-1,m,t}$) if $|X_{n,m,t}$-$Y_{n-1,m,t}|$< $K_{thresh.}$
$Y_n$ = $\frac{1}{2}$ ($X_{n,m,t}$ + $Y_{n,m-2,t}$) if $|X_{n,m,t}$-$Y_{n-1,m-2,t}|$< $K_{thresh.}$
$Y_n$ = $\frac{1}{2}$ ($X_{n,m,t}$ + $Y_{n,m-1,t-1}$) if $|X_{n,m,t}$-$Y_{n,m-1,t-1}|$< $K_{thresh.}$
$Y_n$ = 1/3*($X_{n,m,t}$ + $Y_{n-1,m,t}$ + $Y_{n,m-2,t}$) if $|X_{n,m,t}$-$Y_{n-1,m,t}|$ and $|X_{n,m,t}$-$Y_{n,m-2,t}|$ < $K_{thresh.}$
$Y_n$ = 1/4*($X_{n,m,t}$ + $Y_{n-1,m,t}$ + $Y_{n,m-2,t}$ + $Y_{n,m-1,t-1}$) if $|X_{n,m,t}$-$Y_{n-1,m,t}|$ and $|X_{n,m,t}$-$Y_{n,m-2,t}|$ and $|X_{n,m,t}$-$Y_{n,m-1,t-1}|$< $K_{thresh.}$

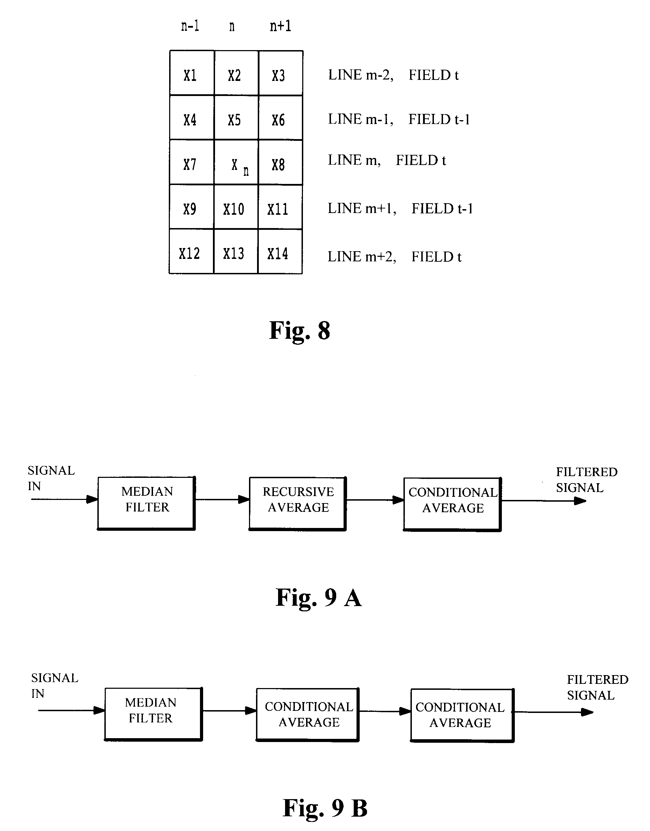

In the filter formulas of the embodiment of Fig. 6 the third formula and the last average value formula have been added.
More temporality can be provided using a 5*3 window as in Fig. 8, where from the successive lines m-2 and m+2 of the field t the samples $X_1$, $X_2$, $X_3$, $X_7$, $X_n$, $X_8$, $X_{12}$, $X_{13}$, $X_{14}$, as well as from lines m-1 and m+1 of the previous field t-1 the samples $X_4$, $X_8$, $X_8$, $X_9$, $X_{10}$, $X_{11}$ enter the window. As above, the sample being analysed is marked with $X_n$. As in conjunction with Fig. 7, the calculation can now be non-recursive or recursive. The samples are original non-filtered samples. In a second alternative, in recursive conditional calculation of average, such fashion can be adopted that the samples $X_4$, $X_8$, $X_8$; $X_9$, $X_{10}$, $X_{11}$ of the previous field t-1 are earlier filtered samples, whereby letter X can be thought to have been replaced by reference letter Y.
In the recursive alternative, also such method can be adopted that all the samples for which the filtering has been accomplished in advance, are included in the window. Hereby, in addition to the samples of field t-1 the samples $X_1$, $X_2$, $X_3$ and $X_7$ of field t are filtered samples, whereby the marking X can be thought of being replaced by marking Y.
The difference of each sample of the window from sample $X_n$ is calculated and then the average of the samples is calculated. In calculating the average, only the samples are included in which the difference is smaller than the threshold value $K_{thresh.}$. For the filter the following is true:

$Y_n$ = AVE($X_n$, $X_1$, $X_3$, $X_4$, $X_8$, $X_8$, $X_7$, $X_8$, $X_9$, $X_{10}$, $X_{12}$, $X_{13}$, $X_{14}$)

only from the samples $X_j$, for which $|X_n$-$X_j|$<$K_{thresh.}$ is true when j = 1, 2, 3, 4, 5, 6, 7, 8, 9, 10, 11, 12, 13, 14.

An advantage of said filter utilizing samples from different fields is that the flat area of the fields will not become striped although it is composed of lines from different fields, and in addition, the attenuation of noise is improved.
The methods based on the use of conditional average described above are well appropriate for reducing the noise of the television picture. The processing needed is simple and memory need is insignificant. This makes them appropriate to be connected in succession in a cascade and moreover, also for use together with other, e.g. median, filters. The block diagram of said applications is presented in Figs 9 A and 9 B. The first of said figures presents a filter connected after any non-linear, e.g. median filter known in the art, and using recursive calculation of average. The combination is disclosed in Finnish patent application FI-916162. Thereafter a filter calculating a conditional average is connected. In the method as shown in Fig. 9A both the median filter and the conditional average filter have been so designed that they do not cause visible defects in the picture. Said filters reduce noise variance, not, however, being capable of removing it completely. The adaptive recursive average filter can now be designed so that it generates as few errors in mobile pixels as possible in which the recursive average filter does not filter noise (it should not if the motion adaption operates appropriately). Thus, the typical weakness of the recursive median filter can thus be avoided in mobile areas.

In the latter figure two filters calculating the conditional average have been connected after the median filter. The conditional average filters in Fig. 9B are capable, when connected in cascade, to attenuate noise effectively. However, the noise-containing samples in which the grey level deviates sufficiently from the value of the centremost sample of the window (> threshold value), remain unfiltered and are displayed as impulse-like noise in the filtered image. For removing said samples, the median filter serves its purpose very efficiently. The filters are different embodiments. The notable feature in cascade connection is that the input samples of the filter are not original samples, but samples processed in the preceding filter.

Fig. 10 shows the windows required by the intra field filters connected in cascade as shown in Figs 9A and 9B. In 3*3 window A a given value is calculated for the samples of the field using a nine point median filter. Thereafter, also in 3*3 window B, a filter calculating the conditional average according to the invention is used and possible corrected values can be provided for the samples. Finally, a third filter calculating the conditional average and operating in the 3*3 window C is used, from the output whereof the final filtered samples of the field are produced.

The filters utilizing the conditional average now disclosed reduce effectively the noise the amplitude of which is lower than the selected threshold value $K_{thresh.}$. However, only few samples may have a higher amplitude of the noise than the threshold value. Said samples are visible as individual impulses in a filtered picture. Using an appropriately constructed median filter, e.g. so-called "idempotet" median filters said impulses can be eliminated without deteriorating the picture quality. In operating intra field, only 5 line memories are needed at most, that is, in an instance as shown in Fig. 9. By way of comparison, let it be mentioned that in the prior art design mentioned on page 2, 1 to 2 field memories are needed. In the method now described all one-sample sized details exceeding the threshold value remain unchanged, therefore the picture to be displayed will not be impaired by the filter according to the present method. Since no motion detector is used in the method, no image errors are produced. In the methods using a motion detector it is difficult to avoid errors caused by the use of the detector.

The invention is described above with the aid of a number of embodiments. However, it is obvious that a plurality of other embodiments based on the use of conditional average can be constructed while remaining within the protective scope of the claims. In calculating conditional average it is preferable to use recursion because with the aid of recursion the efficiency of the filter can be improved, particularly if teh noise is white. The non-recursive filter is not as efficient but at the same time errors caused possibly by recursion can be avoided, such as spreading of details. If a detail is interpreted by the recursive filtering as noise, this spreads it on a wide area (i.e. "drags" the error along). On the other hand, a non-recursive filter makes an error only in one point at a time.

## Claims

1. A method for eliminating noise from a sampled video signal, in which samples from at least one line are conducted into a filter window, and by using the window samples, a sample $(Y_n)$ filtered from an original sample $(X_n)$ is formed, whereby a line of the samples filtered earlier can be conducted to become the input of the window, characterized in that it comprises the following steps:

   - calculation of the difference of the values of the original sample $(X_n)$ being analysed and of at least one adjacent sample thereof,

   - comparison of the differences with a predetermined threshold value $(K_{thresh.})$,

   - calculation of the average from the sample being analysed and from the adjacent samples, the difference whereof from the sample being analysed is smaller than said threshold value,

   - setting the average to become the filtered sample $(Y_n)$ if at least one of the differences is smaller than the threshold value, but otherwise the filtered sample ($Y_n$) is the same as the sample being analysed.

2. Method according to claim 1, characterized in that the adjacent sample used in averaging is the preceding original sample ($X_{n-1}$) on the same line.

3. Method according to claim 1, characterized in that the adjacent sample used in the averaging is the preceding filtered sample ($Y_{n-1}$) on the same line, whereby the average is a recursive average.

4. Method according to claim 1, characterized in that in averaging a preceding already filtered sample ($Y_{n-1}$) in the same line and an already filtered sample ($Y_{n,m-2}$) locating horizontally above the sample being analysed on a preceding in the same field are used as adjacent samples, whereby the average is a recursive average.

5. Method according to claim 4, characterized in that in averaging the filtered sample ($Y_{n,m-1,t-1}$) of a previous field (t-1) is moreover used as an adjacent sample which is scanned between the sample ($X_n$) being analysed and the earlier filtered sample ($Y_{n,m-2}$) locating horizontally above the sample being analysed on a preceding line (m-2) of the same field (t), whereby the average value is a temporal recursive average value.

6. Method according to claim 5, characterized in that N1*N2 window is used, to which N2 pieces of successive original samples from one and same field are conducted from N1 successive lines, and in which a sample ($X_n$) being analysed is the cemtremost sample of the window while the other samples form the adjacent samples.

7. Method according to claim 6, characterized in that the samples preceding the sample being analysed are earlier filtered samples (Y), whereby the average is a recursive average.

8. Method according to claim 1, characterized in that 5*3 window is used, to which three lines of one and same field (t) and the two lines of the preceding field (t-1) scanned between said lines are conducted simultaneously and in which the sample ($X_n$) to be analysed is the centremost sample of the window while the other samples form the adjacent samples.

9. Method according to claim 8, characterized in that the samples of the lines of the preceding field (t-1) are earlier filtered samples (Y), whereby the average is a recursive average.

10. Method according to claim 9, characterized in that in addition, the samples preceding the sample ($X_n$) being analysed in the same field are earlier filtered samples, whereby the average is a recursive average.

11. Method according to claim 1, characterized in that the threshold value ($K_{thresh.}$) is a grey-level function of the sample being analysed in that it corresponds as well as possible to the properties of the human eye.

12. A noise elimination filter of video signal, to which one or more samples composed of samples are conducted simultaneously from at least one field, and the output whereof consists of filtered samples ($Y_n$), and said output may also be one of the inputs of the filter, characterized in that it comprises
    - calculation means to calculate the difference of the values of a sample ($X_n$) being analysed and of at least one of the adjacent samples,
    - comparative means for comparing each difference with a predetermined threshold value ($K_{thresh.}$) and for producing a conditional signal associated with each adjacent sample,
    - a means for calculating the conditional average, calculating the average of the sample being analysed and of the adjacent samples the conditional signal associated wherewith indicates that the difference from the sample being analysed is smaller than the threshold value,
    - means for setting an average to become a filtered sample ($Y_n$) if at least one of the differences is smaller than the threshold value, but otherwise the filtered sample ($Y_n$) is the same as the sample being analysed.

13. A filter according to claim 12, characterized in that it operates in a N1*N2 window and that N2 pieces of successive samples from N1 number of consecutive lines in the same field are conducted thereto, and in which the sample ($X_n$) being analysed is the centremost sample of the window when the other samples form the adjacent samples.

14. Filter according to claim 12, characterized in that it operates in a 5*3 window, to which three lines of the same field and the two lines of the previous field (t-1) scanned between said lines are simultaneously conducted, and in which the sample ($X_n$) being analysed is the centremost sample of the window while the other samples form the adjacent samples.

15. Filter according to claim 13 or 14, characterized in that the samples preceding a sample ($X_n$) being analysed are earlier filtered samples, whereby the average is a recursive average.

16. Filter according to claim 12, characterized in that it is provided with means for detecting the grey level of the sample being analysed and for determining the threshold value ($K_{thresh.}$) equivalent to the grey level, whereby the output of the mean, i.e. the signal indicating the threshold value, has been connected to the comparative means.

17. A noise elimination filter unit for video signal, comprising cascade connected filters, at least one of which being a median filter, characterized in that the output of the median filter has been connected to the filter calculating the recursive average and known as such in the art, the sampled video signal derived from the output whereof is connected to the input of the filter calculating the conditional average as original samples, said filter comprising:
   - calculation means to calculate the difference of the values of the original sample ($X_n$) being analysed and of at least one of the adjacent samples thereof,
   - comparative means for comparing each difference with a given threshold value ($K_{thresh.}$) and for forming the conditional signal associated with each adjacent sample,
   - a calculation means of the conditional average to calculate average of a sample being analysed and of the adjacent samples, the conditional signal associated wherewith indicating that the difference from the sample being analysed is smaller than the threshold value,
   - means for setting the average to become a filtered sample ($Y_n$) if at least one of the differences is smaller than the threshold value, but otherwise the filtered sample ($Y_n$) is the same as the sample being analysed.

18. Filter unit according to claim 17, characterized in that after the median filter, the two filters calculating the conditional average have been connected in cascade.

19. Filter unit according to claim 17 or 18, characterized in that said median filter has been connected to become the last filter in the filter unit.

+L

-L

**Fig. 1**

+L

-L

**Fig. 2**

LINE m-2,   FIELD t

LINE m,   FIELD t

LINE m+2,   FIELD t

## Fig. 3

LINE m-2,   FIELD t

LINE m,   FIELD t

LINE m+2,   FIELD t

## Fig. 6

LINE m-2,   FIELD t

LINE m,   FIELD t

LINE m+2,   FIELD t

## Fig. 5

| X1 | X2 | X3 |
|----|----|----|
| X4 | $X_n$ | X6 |
| X7 | X8 | X9 |

LINE m-2,   FIELD t

LINE m,   FIELD t

LINE m+2,   FIELD t

## Fig. 7

THRESHOLD VALUE

GREY LEVEL

## Fig. 4

10

| | n-1 | n | n+1 | |
|---|---|---|---|---|
| | X1 | X2 | X3 | LINE m-2,  FIELD t |
| | X4 | X5 | X6 | LINE m-1,  FIELD t-1 |
| | X7 | X$_n$ | X8 | LINE m,  FIELD t |
| | X9 | X10 | X11 | LINE m+1,  FIELD t-1 |
| | X12 | X13 | X14 | LINE m+2,  FIELD t |

**Fig. 8**

SIGNAL IN → MEDIAN FILTER → RECURSIVE AVERAGE → CONDITIONAL AVERAGE → FILTERED SIGNAL

**Fig. 9 A**

SIGNAL IN → MEDIAN FILTER → CONDITIONAL AVERAGE → CONDITIONAL AVERAGE → FILTERED SIGNAL

**Fig. 9 B**